# EUROPÄISCHE PATENTSCHRIFT

(11) **EP 2 437 016 B1**
(45) Veröffentlichungstag und Bekanntmachung des Hinweises auf die Patenterteilung: **01.11.2023**
(21) Anmeldenummer: 11183593.0
(22) Anmeldetag: 30.09.2011
(51) Int. Cl.: F26B 11/04

(54) **TROCKNERTROMMEL FÜR HAUSMÜLL UND VERFAHREN ZUM TROCKNEN VON HAUSMÜLL**
DRYING DRUM FOR DOMESTIC WASTE AND METHOD FOR DRYING DOMESTIC WASTE
TAMBOUR DE SÉCHAGE DE DÉCHETS MÉNAGERS ET PROCÉDÉ DE SÉCHAGE DE DÉCHETS MÉNAGERS

(30) Priorität: 01.10.2010 DE 102010047075
(43) Veröffentlichungstag der Anmeldung: 04.04.2012
(73) Patentinhaber: ALBA 2 Energy GmbH, 16767 Velten (DE)
(72) Erfinder:
(74) Vertreter: Grünecker Patent- und Rechtsanwälte PartG mbB

(56) Entgegenhaltungen:
- EP-A1- 1 502 667
- WO-A1-2006/039770
- CN-A- 101 644 528
- DE-A1- 2 713 054
- JP-B2- 3 741 473
- JP-U- S55 171 400

## Beschreibung

Die Erfindung betrifft ein Verfahren zum Trocknen von Hausmüll, der eine Leichtstofffraktion und eine Schwerstofffraktion umfasst, mittels einer rotierenden Trocknertrommel mit Abwurfschaufeln,einer Trommelwand und Schottwände, die einen Innenraum der Trocknertrommel unterteilen und die sich im Wesentlichen quer zur Längserstreckung der Trocknertrommel erstrecken, wobei der zu trocknende Hausmüll in die Trocknertrommel eingebracht und ein entlang der Trocknertrommel gerichteter Heißluftstrom die Leichtstofffraktion durch den Trommeltrockner transportiert und wobei die Schwerstofffraktion über wenigstens einen Längenabschnitt der Trocknertrommel zumindest zu einem Teil an den Abwurfschaufeln vorbei entlang der Trommelwand der Trocknertrommel transportiert wird.

Die Erfindung betrifft ferner eine Trocknertrommel für Hausmüll, mit wenigstens einer Einlassöffnung, wenigstens einer Auslassöffnung, einen durch Schottwände unterteilten Innenraum, wobei sich die Schottwände im Wesentlichen quer zur Längserstreckung der Trocknertrommel erstrecken, und mit einem sich im Wesentlichen kontinuierlich von der Einlass- zur Auslassöffnung erstreckenden Strömungskanal entlang des Mittenbereichs der Trocknertrommel und wobei sich wenigstens ein im Wesentlichen durchgängiger Schwerstofftransportkanal entlang einer Trommelwand durch wenigstens zwei aufeinanderfolgende Schottwände hindurch in Richtung der Auslassöffnung erstreckt.

Ein derartiges Verfahren und ein Trommeltrockner mit einer derartigen Trocknertrommel werden beispielsweise bei der Herstellung von Ersatzbrennstoff, wie beispielsweise Fluff oder Pellets, aus Hausmüll in sogenannten MPS-Anlagen (MPS - Mechanisch-Physikalische Stabilisierung) eingesetzt. Mit MPS-Anlagen ist es möglich, bei geringem Flächenbedarf sehr große Stoffströme von über 200.000 Tonnen pro Jahr zu verarbeiten.

In MPS-Anlagen wird der Hausmüll nach seiner Anlieferung und Zwischenbunkerung zunächst vorzerkleinert und gesiebt. Anschließend können einzelne Stofffraktionen im Rahmen einer Aufbereitung abgeschieden werden. Die abgeschiedenen Stofffraktionen können Eisen und Nichteisenmetalle sowie unterschiedliche Kunststoffarten umfassen. Der nach dem Abscheiden der Fraktionen verbliebene Stoffstrom kann weiter zerkleinert und in einem Pufferbunker zwischengelagert werden.

Aus dem Pufferbunker kann der verbleibende Stoffstrom in einen Trommeltrockner verbracht werden, der eine von einem Heißluftstrom durchströmte, rotierende Trocknertrommel aufweist.

Eine überwiegend aus leichten, flugfähigen Bestandteilen gebildete Leichtstofffraktion wird durch den Heißluftstrom aus dem Trommeltrockner heraus transportiert. Über Filter oder, bevorzugt, Zyklone wird die Leichtstofffraktion dann vom Heißluftstrom getrennt.

Die Schwerstofffraktion, die überwiegend aus nicht flugfähigen, schweren Bestandteilen besteht, wird mechanisch durch die Drehbewegung der Trocknertrommel zu einem Schwerstoffaustrag gefördert, durch den sie aus der Trocknertrommel herausfällt. Durch mechanische Einwirkung von Einbauten der Trocknertrommel wird die Schwerstofffraktion von der Leichtstofffraktion getrennt. Die Trocknertrommel dient somit nicht nur zum Trocknen, sondern auch zum Trennen der flugfähigen Leichtstofffraktion von der nicht flugfähigen Schwerstofffraktion.

An den Trommeltrockner schließen sich weitere Sichtungsverfahren an, um inertes, nicht brennbares Material aus dem Stoffstrom auszusondern. Der verbleibende Stoffstrom wird schließlich zu Ersatzbrennstoff konfektioniert, beispielsweise in Form von Pellets oder Fluff, und zur Energiegewinnung in Müllverbrennungsanlagen verbrannt.

Die Trocknertrommel ist aufgrund des sehr hohen Materialdurchsatzes einem hohen Verschleiß ausgesetzt. Ein Stillstand des Trommeltrockners ist für die gesamte Anlage kritisch, da aufgrund des ständig hohen Stoffstroms bei einem Stillstand des Trommeltrockners sämtliche Pufferkapazitäten der Müllverwertungsanlage rasch erschöpft sind. Laufen die vorhandenen Puffer über, so muss der Hausmüll anders entsorgt werden, was sehr teuer ist. Der Trommeltrockner darf folglich nur geringe Ausfallzeiten aufweisen.

Um die Ausfallzeiten zu verringern, ist nach der DE 10 2007 010 070 A1 die Trockentrommel mit einer Verschleißschutzauskleidung versehen, welche die Verschleißanfälligkeit mindert. Die Verschleißschutzauskleidung kann insbesondere aus einem keramischen Werkzeug gefertigt sein. Diese Ausgestaltung weist zwar bereits verbesserte Standzeiten auf. Dennoch ergibt sich im Betrieb nach wie vor ein überraschend hoher Verschleiß, insbesondere bei einer keramischen Verschleißschutzauskleidung, die nicht geeignet ist, hohen Schlagkräften zu widerstehen.

In der EP 1 502 667 A1 ist ein Verfahren gezeigt zum Erstellen von Briketts und/oder Pellets aus Hausmüll. Der Hausmüll wird in einen Trommeltrockner eingeführt, wobei eine Leichtstofffraktion mit einem Heißluftstrom durch einen zentralen Strömungskanal transportiert wird. Eine Schwerstofffraktion wird mechanisch durch die Rotationsbewegung der Trocknertrommel gefördert. Um den Verschleiß zu verringern, wird die Schwerstofffraktion durch einen Schwerstofftransportkanal entlang der Trommelwand transportiert. Die ausgetragene Leichtstofffraktion wird dabei bis zu einer Feuchtigkeit zwischen 5 bis 20 Gew.-% getrocknet und zu Briketts verarbeitet, die als Treibstoff verwendet oder deponiert werden können.

Gemäß der chinesischen Patentanmeldung CN101644528 A weist die Trocknertrommel einen Schwerstofftransportkanal auf, durch den eine Schwerstofffraktion durch die Trocknertrommel transportiert werden kann. Die Trocknertrommel ist darüber hinaus in Sektionen unterteilt, die durch alternierend angeordnete Schottwände gebildet sind. Durch die alternierend angeordneten Schottwände wird ein turbulenter Heißluftstrom erzeugt, wodurch die Partikel in jeder Sektion soweit getrocknet werden bis sie durch den Heißluftstrom in die nächste Sektion transportiert werden können.

Das Anforderungsprofil an eine Trocknertrommel, die in Müllverwertungs-Anlagen eingesetzt wird, unterscheidet sich vom Anforderungsprofil der Trommeln, wie sie beispielsweise in der Baustoffindustrie eingesetzt werden: In der Baustoffindustrie wird im Unterschied zu der Müllaufbereitung ein eher homogener Stoffstrom verarbeitet. Hausmüll dagegen ist sehr inhomogen und weist die unterschiedlichsten Materialien mit weit voneinander abweichenden Dichten und Härtegraden auf. Die in der Baustoffindustrie verarbeiteten Stoffströme sind zudem wesentlich kleiner und fallen meist batchweise an, in den Stillstandsphasen können Wartungs- und Reparaturarbeiten stattfinden, ohne dass besonders große Pufferkapazitäten vorgehalten werden müssen. Dies ist beim Dauerbetrieb der Trommeltrockner in Müllverwertungsanlagen nicht möglich.

Einen Trommeltrockner für die Baustoffindustrie zeigt beispielsweise die US 5,033,863. Dieser Trommeltrockner dient gleichzeitig als Mischvorrichtung zur Bereitstellung von Asphalt. In ihm werden zermahlener Stein und Asphalt mit Hilfe von an der Trommelinnenseite angeordneten Flügeln durchmischt und durch Heizgase erhitzt.

Die US 4,175,335 befasst sich mit einer Trocknertrommel für Sand und Schotter, die einen inneren und einen äußeren Zylinder aufweist. Die beiden Zylinder sind durch drei sternförmig angeordnete Abstandshalter koaxial gehalten. Innerhalb des inneren Zylinders wird der Sand mittels Schaufeln zunächst bis zu demjenigen Ende befördert, an dem Heizgase eingeleitet werden. Dort wird der Sand dann mit Schotter durchmischt. Anschließend wird das Sand-Schotter-Gemisch durch den Raum zwischen den beiden Zylindern über auf der Innenseite des äußeren Zylinders angebrachte Schaufeln zum anderen Ende der Trommel befördert.

Die DE 73 13 428 U zeigt eine Drehtrommel zur thermischen Behandlung von stark schleißendem Gut mit an der Trommelinnenwand befestigten Hubschaufeln. Eine weitere Trommel zur thermischen Behandlung von Schüttgütern ist aus der US 1,595,659 bekannt. In der DE 2 255 069 ist eine weitere Trommel zur thermischen Behandlung von schleißendem Gut beschrieben, bei der ebenfalls Hubschaufeln zum Fördern des Gutes vorgesehen sind. Durch die Trommel strömt ein Gasstrom. Die BE 902 023 schließlich zeigt eine Trocknertrommel für Sägemehl.

Alle diese Trommeln befassen sich mit der Verarbeitung entweder einer Leichtstofffraktion, beispielsweise Sägemehl, oder einer Schwerstofffraktion wie Gestein. Für die Verwendung in einer Müllverwertungsanlage sind sie nicht geeignet.

In Anbetracht des Standes der Technik liegt der Erfindung die Aufgabe zugrunde, eine Trocknertrommel zu schaffen, deren Standzeiten ohne Beeinträchtigung des Trocknungsvorganges und der Trennung der Leichtstoff- von der Feststofffraktion bei sehr großen Stoffströmen deutlich verbessert sind.

Diese Aufgabe wird für das eingangs genannte Verfahren durch die Merkmale des unabhängigen Verfahrensanspruch 12 gelöst. Demnach wird diese Aufgabe dadurch gelöst, dass der Heißluftstrom im stromauf gelegenen Teil der Trocknertrommel verlangsamt wird, indem sich ein Strömungskanal koaxial entlang der Trocknertrommel durch zentrale Strömungsöffnungen der Schottwände erstreckt und die Strömungsquerschnitte aufeinanderfolgender Strömungsöffnungen im stromauf gelegenen Teil der Trocknertrommel in Richtung von der Einlassöffnung zur Auslassöffnung zunehmen, wobei ein stromab gelegener Teil der Trocknertrommel ein Drittel oder die Hälfte der Längserstreckung der Trocknertrommel umfasst.

Für die eingangs genannte Trocknertrommel wird diese Aufgabe durch die Merkmale des unabhängigen Vorrichtungsanspruch 1 gelöst. Demnach wird diese Aufgabe dadurch gelöst, dass sich der Strömungskanal koaxial entlang des Trommeltrockners durch zentrale Strömungsöffnungen der Schottwände erstreckt und die Strömungsquerschnitte aufeinanderfolgender Strömungsöffnungen im stromauf gelegenen Teil der Trocknertrommel in Richtung von der Einlassöffnung zur Auslassöffnung zunehmen, wobei ein stromab gelegener Teil der Trocknertrommel ein Drittel oder die Hälfte der Längserstreckung der Trocknertrommel umfasst.

Diese überraschend einfache Lösung verringert den Verschleiß sowohl an den Schottwänden als auch an der Trommelwand dort, wo zumindest ein Teil der Schwerstofffraktion ausschließlich entlang der Trommelwand transportiert und nicht mehr aufgrund der Rotationsbewegung von den Abwurfschaufeln durch den Innenraum des Trockners auf die gegenüberliegende Trommelwand geworfen wird und dort zu Schlagschäden führt. Zudem schlägt bei dieser Ausgestaltung die Schwerstofffraktion nicht mehr so häufig gegen die Schottwände. Durch die Erfindung wird der Weg der Schwerstofffraktion deutlicher als bisher vom Weg der Leichtstofffraktion getrennt. Gemäß der erfinderischen Lösung wird im stromauf gelegenen Teil der Trocknertrommel eine Diffusorströmung mit zur Auslassöffnung hin abnehmender Strömungsgeschwindigkeit und verstärkter Wärmeübertragung an den Stoffstrom erzeugt. Diese Ausgestaltung unterstützt eine Schocktrocknung, wodurch sich Teile der Schwerstofffraktion und der Leichtstofffraktion, die beim Eintrag aufgrund der Feuchte aneinander kleben lösen.

Das erfindungsgemäße Verfahren und die erfindungsgemäße Trocknertrommel unterscheiden sich insbesondere von der Lehre der DE 10 2007 010 070 A1, bei der zwar die Schwerstofffraktion entlang der Trommelwand der Trocknertrommel durch Öffnungen in einer stromauf gelegenen Stauscheibe zu den Abwurfschaufeln gelangen kann, anschließend aber zwangsläufig durch die Abwurfschaufeln in den Trommelinnenraum geworfen wird, weil die stromab gelegene Schottwand keine Öffnungen aufweist und somit kein durchgängiger Schwerstofftransportkanal vorhanden ist.

Die erfindungsgemäße Lösung kann durch die folgenden zusätzlichen Merkmale weiter verbessert werden, die jeweils beliebig miteinander kombiniert werden können.

Vorzugsweise findet beim erfindungsgemäßen Verfahren eine Schocktrocknung statt. Durch die Schocktrocknung lösen sich Teile der Schwerstofffraktion und der Leichtstofffraktion, die beim Eintrag aufgrund der Feuchte aneinander kleben, bereits im stromauf gelegenen Teil der Trocknertrommel. Die Schocktrocknung findet vorzugsweise im ersten Drittel der Trocknertrommel statt.

Aufgrund der zum Auslass hin zunehmenden Trennung der Leichtstofffraktion von der Schwerstofffraktion kann nach einer weiteren vorteilhaften Ausgestaltung die Schwerstofffraktion nur im stromab gelegenen Teil, der ein Drittel oder die Hälfte der Längserstreckung der Trocknertrommel umfasst, zu den dort angebrachten Abwurfschaufeln transportiert werden, bzw. der Schwerstofftransportkanal in diesem Teil der Trocknertrommel sich durchgängig bis zur Auslassöffnung erstrecken.

Zur Verschleißverringerung am vorteilhaftesten ist es jedoch, wenn sich der Schwerstofftransportkanal durchgängig vom Einlass zum Auslass entlang der Trommelwand erstreckt bzw. die Schwerstofffraktion an sämtlichen Abwurfschaufeln vorbei transportiert werden kann.

Gemäß einer weiteren vorteilhaften Ausgestaltung können die Schottwände mit jeweils wenigstens einer Schwerstofftransportöffnung versehen sein, durch die die Schwerstofffraktion gefördert wird. Der Schwerstofftransportkanal ergibt sich durch die gedachte Verbindung von in Längsrichtung der Trocknertrommel aufeinanderfolgenden Schwerstofftransportöffnungen. Insbesondere können alle Schottwände derartige Schwerstofftransportöffnungen aufweisen.

Die Schwerstofftransportöffnungen können außen durch die Trommelwand der Trocknertrommel begrenzt sein, so dass die Schwerstofffraktion entlang der Trommelwand hindurchrutschen kann und nicht radial angehoben werden muss. Ihre lichte Weite kann zwischen etwa 10 cm und 40 cm betragen, vorzugsweise zwischen etwa 10 cm und 20 cm. Die lichte Weite ist insbesondere etwas größer als die mittlere Größe des in die Trocknertrommel geleiteten Materials, so dass auch aufgrund der Hitze oder aufgrund Magnetismus zusammenbackende Klumpen der Feststofffraktion noch hindurchpassen.

Die lichte Weite der Schwerstofftransportöffnungen kann sich in Längsrichtung der Trocknertrommel zur Auslassöffnung hin erhöhen. Durch diese Maßnahme wird berücksichtigt, dass sich die Klumpen der Schwerstofffraktion auf ihrem Weg zur Austragsöffnung vergrößern können, wenn sich weiteres Material durch Magnetismus oder Anbacken an den Klumpen ansammelt.

Der Gesamtquerschnitt der Schwerstofftransportöffnungen einer Schottwand kann in Richtung zur Austragsöffnung hin zunehmen, um die zunehmende Ansammlung von Material an der Trommelwand zu vermeiden.

Gemäß einer weiteren vorteilhaften Ausgestaltung können die Schottwände über den Außenumfang verteilt mehrere Schwerstofftransportöffnungen aufweisen, um die Schwerstofffraktion möglichst rasch und auf möglichst kürzesten Wege im Zuge der Rotation der Trocknertrommel zur Austragsöffnung hin zu fördern.

Im Betrieb der Trocknertrommel wird die Leichtstofffraktion von dem wandnahen Bereich der Trocknertrommel in den Heißluftstrom geworfen, so dass sie vom Heißluftstrom mitgerissen wird. Hierzu können die Abwurfschaufeln dienen.

Die Abwurfschaufeln können gemäß einer weiteren vorteilhaften Ausgestaltung in einem Schaufelsegment angeordnet sein, das von zwei benachbarten Schottenwänden begrenzt sein kann. Der Trommeltrockner kann wenigstens ein derartiges Schaufelsegment, vorzugsweise jedoch mehrere derartige Schaufelsegmente aufweisen.

Die Abwurfschaufeln können bevorzugt so ausgestaltet sein, dass der zu trocknende Hausmüll durch den Mittenbereich der Trocknertrommel zum benachbarten Schaufelsegment geworfen wird. Dadurch wird vermieden, dass Material immer wieder auf die darunter liegenden Abwurfschaufeln fällt und diese zerstört.

Die Abwurfschaufeln können in ihrem an die Trommelwand angrenzenden Abschnitt bis zu einem in etwa oder exakt der lichten Weite der Zugriffsöffnung entsprechenden Abstand von der Trommelwand sehr steil verlaufen und sich erst ab diesem Abstand zunehmend in Umfangsrichtung ausrichten. Durch diese Ausgestaltung kann vermieden werden, dass die an der Trommelwand aufliegende Schwerstofffraktion von den Schaufeln aufgehoben und durch den Innenraum der Trocknertrommel auf die gegenüberliegende Wand geworfen wird. Der an der Innenwand der Abwurfschaufeln liegende steile Abschnitt der Abwurfschaufeln fördert die Schwerstofffraktion bei dieser Ausgestaltung ohne Abwerfen entlang der Trommelwand.

Gemäß einer weiteren vorteilhaften Ausgestaltung kann die stromauf und/oder stromab einer Abwurfschaufel gelegene Schwerstofftransportöffnung mit ihrem Rand an eine Abwurfschaufel angrenzen, insbesondere bei den ein Schaufelsegment begrenzenden Schottwänden. Bei dieser Maßnahme kann die Schwerstofffraktion an der Trommelwand beim Durchtritt durch die stromauf gelegene Schottwand direkt auf den Bereich der Abwurfschaufel an der Trommelwand beziehungsweise von dem Bereich der Abwurfschaufel direkt an der Trommelwand durch die stromab gelegene Schwerstofftransportöffnung gefördert werden.

Um einen schnellen Transport der Schwerstofffraktion durch die Schottwände eines Schaufelsegments hindurch zu gewährleisten, können in Längserstreckung der Trocknertrommel aufeinanderfolgende Schwerstofftransportöffnungen im Umfangsrichtung zueinander versetzt angeordnet sein bzw. nicht miteinander fluchten. Insbesondere kann der Winkel, um den aufeinanderfolgende Schwerstofftransportöffnungen in Umfangsrichtung gegeneinander versetzt sind, in Abhängigkeit vom Abstand der Schwerstofftransportöffnungen, der Drehgeschwindigkeit der Trocknertrommel und der mittleren Fördergeschwindigkeit der Schwerstofffraktion entlang der Trommelwand so bestimmt sein, dass die Schwerstofffraktion möglichst geradlinig von der Eintrags- zur Austragsöffnung gefördert wird.

Für den Transport und die Trocknung der Leichtstofffraktion mittels des Heißluftstromes hat es sich als vorteilhaft herausgestellt, wenn gemäß der vorliegenden Erfindung sich der Strömungskanal koaxial entlang der Trocknertrommel durch zentrale Strömungsöffnungen der Schottwände erstreckt und die Strömungsquerschnitte aufeinanderfolgender Strömungsöffnungen in Richtung von der Einlass- zur Auslassöffnung zunächst zunehmen und gemäß einer vorteilhaften Ausführungsform dann abnehmen. Durch diese Maßnahme wird die Schocktrocknung des Stoffstroms im stromauf gelegenen Teil der Trocknertrommel unterstützt.

Ferner kann gemäß einer weiteren vorteilhaften Ausgestaltung der Strömungsquerschnitt der Strömungsöffnung der letzten, an der Auslassöffnung gelegenen Schottwand kleiner sein als der Strömungsquerschnitt der in Richtung der Einlassöffnung davor liegenden Schottwand. Die letzte Strömungsöffnung bestimmt somit den Strömungswiderstand der Trocknertrommel und führt, ähnlich einer Messblende, zu einem definierten Volumenstrom in Abhängigkeit von der Geschwindigkeit des Heißluftstroms.

Wie bereits eingangs erwähnt ist, kann die Trocknertrommel zum Einbau in einen Trommeltrockner ausgestaltet sein. Der Trommeltrockner kann Teil einer Anlage zur Erzeugung von Ersatzbrennstoff aus Hausmüll sein, wobei die Anlage Sortiereinrichtungen zum Sortieren des Hausmülls in verschiedene Fraktionen aufweist.

Die Erzeugung von Ersatzbrennstoff innerhalb enger Qualitätsgrenzen erfordert eine gründliche Trocknung mit über die die Betriebsdauer gleichbleibendem Trocknungsgrad. Entsprechend sollten die Prozessgrößen in der Trocknertrommel nur geringfügig schwanken. Um dies sicherzustellen, werden in der Trocknertrommel die Prozessgrößen, wenigstens Temperatur und Feuchte überwacht. Die Größe des Stoffstroms, der in die Trocknertrommel eingebracht wird, wird in Abhängigkeit von den Prozessgrößen, insbesondere Temperatur und/oder Feuchte, gesteuert.

Im Folgenden ist die Erfindung beispielhaft anhand einer möglichen Ausführungsform mit Bezug auf die beigefügte Zeichnung genauer beschrieben. Die bei dieser Ausführungsform dargestellte Merkmalskombination dient lediglich Anschauungszwecken.

Die einzige Figur zeigt eine schematische Ansicht eines Querschnitts durch einen erfindungsgemäßen Trommeltrockner.

Auf die Ausführungen in der DE 10 2007 010 070 A1 zum Aufbau einer MPS-Anlage, ihre Bestandteile und des in einer solchen Anlage, insbesondere einem Trommeltrockner, ausgeführten Verfahren wird vollumfänglich Bezug genommen.

Die Trocknertrommel 1 weist einen Innenraum 2 auf, der von einem Heißluftstrom 4 entlang seiner Längsrichtung 6 durchströmt ist. Der Heißluftstrom 4 tritt durch eine stromauf gelegene Einlassöffnung 8 in den Innenraum 2 ein und durch eine Auslassöffnung 10 aus dem Innenraum wieder heraus. Die Temperatur des Heißluftstroms kann, je nach Zusammensetzung des Hausmülls, die auch regionale Unterschiede aufweist, zwischen 300° C und 500° C liegen. Die Geschwindigkeit des Heißluftstroms kann zwischen 20 m/s und 40 m/s betragen. Ziel ist es, den Stoffstrom schockzutrocknen. Um dies zu gewährleisten, wird der Stoffstrom in Abhängigkeit von Prozessgrößen wie Temperatur und Feuchte in der Trocknertrommel gesteuert. Sinkt beispielsweise die Temperatur und/oder steigt die Feuchte, wird der Stoffstrom verringert und umgekehrt.

Im Bereich der Einlassöffnung 8 weist die Trocknertrommel 1 eine Eintragsöffnung 12 auf, durch die der Stoffstrom 14 in die Trocknertrommel 1 eingebracht wird. Bei dem Stoffstrom 14 handelt es sich vorzugsweise um vorzerkleinerten Hausmüll, aus dem bereits einzelne Wertstofffraktionen abgeschieden sein können.

Die flugfähigen Bestandteile des Stoffstromes 14, die die Leichtstofffraktion 16 bilden, werden vom Heißluftstrom 4 mitgerissen und in Längsrichtung 6 durch die Auslassöffnung 10 hindurch transportiert. Die Leichtstofffraktion 16 kann aus dem Heißluftstrom 4 beispielsweise durch nachfolgende, vom Heißluftstrom durchströmte Zyklone (nicht dargestellt) gefiltert werden.

Die nicht flugfähigen Bestandteile des Stoffstromes 14, die die Schwerstofffraktion 18 des Stoffstroms 14 bilden, fallen beim Eintrag im Wesentlichen unter Schwerkrafteinfluss zu Boden, ihre Bewegung wird nur zu einem geringen Teil vom Heißluftstrom 4 beeinflusst. Die Schwerstofffraktion 18 bewegt sich im Wesentlichen entlang einer Trommelwand 20 der Trocknertrommel 1. Wie in der DE 10 2007 010 070 A1 beschrieben, kann die Trommelwand mit einer Verschleißschutzauskleidung versehen sein, um den Verschleißabtrag durch die Schwerstofffraktion 18 zu verringern.

Im Innenraum 2 sind in Strömungsrichtung des Heißluftstromes hintereinander eine Mehrzahl von Schottwänden 22 vorgesehen, die im Wesentlichen in sich quer zur Längsrichtung 6 erstreckenden Ebenen angeordnet sind. Die Schottwände 22 sind über Schweißstellen 23 mit der Trommelwand 20 verschweißt und in einem um die Trommelachse angeordnete Mittenbereich 24, der sich vorzugsweise koaxial zum Trommeltrockner 1 erstreckt, mit einer Strömungsöffnung 26 versehen. Die Strömungsöffnungen 26 fluchten miteinander und bilden somit einen Strömungskanal , der vorzugsweise dem Transport der Leichtstofffraktion dient. Die Strömungsquerschnitte 28, d.h. die im Heißluftstrom 4 liegenden Flächeninhalte, aufeinanderfolgender Strömungsöffnungen 26 nehmen dabei in Richtung der Auslassöffnung 10 zunächst zu- und können dann wieder abnehmen, wie die gestrichelte Linie 29 zeigt. Auf diese Weise wird im stromauf gelegenen Teil der Trocknertrommel 1 eine Diffusorströmung mit zur Auslassöffnung 10 hin abnehmender Strömungsgeschwindigkeit und verstärkter Wärmeübertragung an den Stoffstrom 14 und im stromab gelegenen Teil der Trocknertrommel eine Düsenströmung mit zunehmender Strömungsgeschwindigkeit und vermehrten Abtransport der in der Diffusorströmung bereits getrockneten Leichtstofffraktion 16 erzeugt. Diese Ausgestaltung unterstützt die Schocktrocknung im Teil .

Insbesondere kann der Strömungsquerschnitt 28 der Strömungsöffnung 26 der letzten, an der Auslassöffnung 10 gelegenen, Schottwand 22 kleiner sein als der Strömungsquerschnitt der in Richtung der Einlassöffnung 8 davor liegenden Schottwand.

Die Schottwände 22 sind außen jeweils mit wenigstens einer Schwerstofftransportöffnung 30 versehen, vorzugsweise jeweils mit mehreren über den Außenumfang verteilten Schwerstofftransportöffnungen 30. Die Anzahl der Schwerstofftransportöffnungen 30 einer jeden Schottwand 22 kann in Richtung zur Auslassöffnung zunehmen.

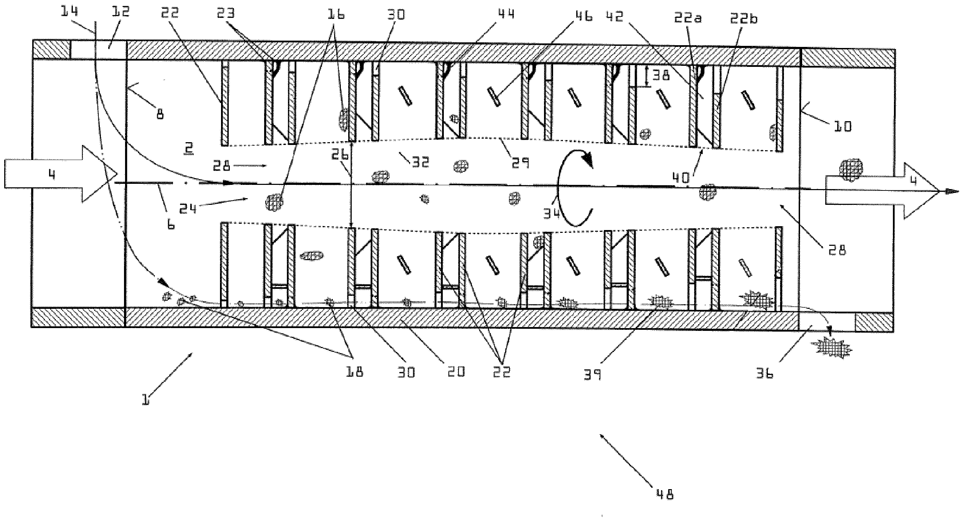

Die in Längsrichtung aufeinanderfolgenden Schwerstofftransportöffnungen bilden einen durchgängigen Weg für die entlang der Trommelwand 20 des Trommeltrockners 1 transportierte Schwerstofffraktion, also einen Schwerstofftransportkanal 32, der in Fig. 1 durch eine doppeltstrichpunktierte Linie angedeutet ist.

Da sich der Trommeltrockner 1, wie Pfeil 34 andeutet, dreht und sich die Schwerstofffraktion 18 im unteren Bereich der Trocknertrommel sammelt, wird die Schwerstofffraktion 18 näherungsweise wendelförmig entlang der Trommelwand 20 zu einer Austragsöffnung 36 transportiert, durch die hindurch die Schwerstofffraktion 18 aus der Trocknertrommel 1 ausgebracht wird. Die Eintrags- 12 und die Austragsöffnung 36 drehen sich mit der Trocknertrommel 1 nicht mit.

Typische Drehgeschwindigkeiten der Trocknertrommel betragen zwischen etwa 2,5 und etwa 7,5 Umdrehungen pro Minute, bei einem Trommeldurchmesser zwischen etwa 1,5 m und etwa 4 m.

Eine lichte Weite 38 der Schwerstofftransportöffnungen 30 kann in Richtung der Auslassöffnung 10 zunehmen, so dass durch Anbacken und Magnetismus sich vergrößernde Klumpen 39 der Schwerstofffraktion auch am stromab gelegenen Ende noch durch die Schwerstofftransportöffnungen 30 passen.

Zwei benachbarte Schottwände 22a, 22b können ein Schaufelsegment 40 begrenzen, in dem in Umfangsrichtung des Trommeltrockners 1 vorzugsweise gleich verteilt mehrere Abwurfschaufeln 42 angeordnet sind. Die Abwurfschaufeln 42 können sich von Schottwand 22a zu Schottwand 22b erstrecken und mit diesen verschweißt sein. Sie können sich ferner bis an die Trommelwand 20 erstrecken. Im Bereich nahe und an der Trommelwand können sie einen steiler verlaufenden Abschnitt 44 aufweisen, so dass die Schwerstofffraktion 18 an der Trommelwand 20 in Richtung der stromab gelegenen Schwerstofftransportöffnung 30 und durch diese hindurch gedrückt und nicht in den Mittenbereich 24 des Trommeltrockners geworfen wird. Die Schwerstofftransportöffnungen 30 in der Schottwand 22a und/oder Schottwand 22b können jeweils an der in Drehrichtung der Trocknertrommel 1 liegenden Vorderseite des Abschnittes 44 liegen, so dass der Abschnitt 44 die Schwerstofffraktion 18 durch die Schwerstofftransportöffnungen 30 drückt.

Die Abwurfschaufeln 42 können sich radial nach innen erstrecken und zum Mittenbereich 24 hin zunächst flacher, d.h. in Umfangsrichtung, und anschließend wieder steiler, d.h. mehr in radialer Richtung, verlaufen. Der Normalenvektor der Abwurfschaufeln 42 ist wenigstens in einem Abschnitt der Abwurfschaufeln 42 auf ein benachbartes Schaufelsegment 40 gerichtet. Der Stoffstrom wird so vorzugsweise auf das benachbarte Schaufelsegment abgeworfen.

Die Abwurfschaufeln 42 sowie deren Abschnitte 44 können zur Längsrichtung 6 der Trocknertrommel 1 geneigt verlaufen, wobei insbesondere das an der Eintragsöffnung 12, stromauf, gelegene Ende einer Abwurfschaufel in Drehrichtung dem stromab gelegenen Ende voreilt, um die Förderwirkung zu erhöhen.

Die Trenn- und Förderwirkung der Abwurfschaufeln 42 kann durch weitere Förderelemente 46 an der Trommelwand 20 verbessert werden.

Da im Bereich der Abwurfschaufeln 42 die Schottwände 22a, 22b beide mit Schwerstofftransportöffnungen 30 versehen sind, kann wenigstens ein Teil der Schwerstofffraktion entlang des Schwerstofftransportkanals 32 an den Abwurfschaufeln 42 vorbei und entlang der Trommelwand 20 transportiert werden. Dieser Teil wird folglich nicht in den Mittenbereich 24 abgeworfen.

Die Trocknertrommel 1 kann insbesondere Teil eines Trommeltrockners 48 sein, der neben den oben beschriebenen Elementen weitere, nicht dargestellte Bauteile und Funktionsgruppen umfassen kann.

Die Trocknertrommel kann gegenüber den obigen Ausführungsbeispiel abgewandelt werden. So muss sich beispielsweise der Schwerstofftransportkanal 32 nicht über die gesamte Länge der Trocknertrommel 1, sondern nur über einen Abschnitt derselben an den in diesem Abschnitt vorhandenen Abwurfschaufeln 42 vorbei erstrecken. Der Schwerstofftransportkanal 32 kann sich von diesem Abschnitt in Trocknertrommel 1 bis zur Austragsöffnung 10 erstrecken.

### Bezugszeichen

- 1: Trocknertrommel
- 2: Innenraum
- 4: Heißluftstrom
- 6: Längsrichtung
- 8: Einlassöffnung
- 10: Auslassöffnung
- 12: Eintragsöffnung
- 14: Stoffstrom/Hausmüll
- 16: Leichtstofffraktion
- 18: Schwerstofffraktion
- 20: Trommelwand
- 22: Schottwand
- 22a: stromauf gelegene Schottwand eines Schaufelsegments
- 22b: stromab gelegene Schottwand eines Schaufelsegments
- 23: Schweißstelle
- 24: Mittenbereich
- 26: Strömungsöffnung
- 28: Strömungsquerschnitt
- 29: gestrichelte Linie
- 30: Schwerstofftransportöffnung
- 32: Schwerstofftransportkanal
- 34: Pfeil/Drehbewegung
- 36: Austragsöffnung
- 38: lichte Weite
- 39: Klumpen der Schwerstofffraktion
- 40: Schaufelsegment
- 42: Abwurfschaufel
- 44: Abschnitt der Abwurfschaufel an der Trommelwand
- 46: Förderelement
- 48: Trommeltrockner

## Patentansprüche

1. Trocknertrommel (1) für Hausmüll (14), mit Abwurfschaufeln (42), einer Trommelwand (20), mit wenigstens einer Einlassöffnung (8), wenigstens einer Auslassöffnung (10), einem durch Schottwände (22) unterteilten Innenraum (2), wobei sich die Schottwände im Wesentlichen quer zur Längserstreckung (6) der Trocknertrommel erstrecken, und mit einem sich im Wesentlichen kontinuierlich von der Einlass- zur Auslassöffnung erstreckenden Strömungskanal entlang eines Mittenbereichs (24) der Trocknertrommel, wobei sich wenigstens ein im Wesentlichen durchgängiger Schwerstofftransportkanal (32) durch wenigstens zwei aufeinander folgende Schottwände (22) entlang der Trommelwand (20) der Trocknertrommel (1) in Richtung der Auslassöffnung (10) erstreckt, wobei sich der Strömungskanal koaxial entlang der Trocknertrommel (1) durch zentrale Strömungsöffnungen (26) der Schottwände (22) erstreckt, **dadurch gekennzeichnet, dass** und die Strömungsquerschnitte (28) aufeinanderfolgender Strömungsöffnungen (22) im stromauf gelegenen Teil der Trocknertrommel (1) in Richtung von der Einlassöffnung (8) zur Auslassöffnung (10) zunehmen, wobei ein stromab gelegener Teil der Trocknertrommel (1) ein Drittel oder die Hälfte der Längserstreckung (6) der Trocknertrommel (1) umfasst.

2. Trocknertrommel (1) nach Anspruch 1, **dadurch gekennzeichnet, dass** sich der Schwerstofftransportkanal (32) durch Schwerstofftransportöffnungen (30) aufeinanderfolgender Schottwände (22) erstreckt.

3. Trocknertrommel (1) nach Anspruch 2, **dadurch gekennzeichnet, dass** die lichte Weite (38) der Schwerstofftransportöffnungen (30) zwischen etwa 10 cm und 40 cm beträgt.

4. Trocknertrommel (1) nach Anspruch 2 oder 3, **dadurch gekennzeichnet, dass** die lichte Weite (38) der Schwerstofftransportöffnungen (30) zur Auslassöffnung (10) hin zunimmt.

5. Trocknertrommel (1) nach einem der Ansprüche 1 bis 4, **dadurch gekennzeichnet, dass** wenigstens ein von zwei benachbarten Schottenwänden (22, 22a, 22b) begrenztes Schaufelsegment (40) vorhanden ist.

6. Trocknertrommel (1) nach einem der Ansprüche 2 bis 5, **dadurch gekennzeichnet, dass** in Längsrichtung (6) des Trommeltrockners (1) aufeinanderfolgende Schwerstofftransportöffnungen (30) nicht miteinander fluchten.

7. Trocknertrommel (1) nach einem der Ansprüche 1 bis 6, **dadurch gekennzeichnet, dass** die Strömungsquerschnitte aufeinanderfolgender Strömungsöffnungen (26) im stromab gelegenen Teil der Trocknertrommel (1) von der Einlassöffnung (8) zur Auslassöffnung (10) abnehmen.

8. Trocknertrommel (1) nach einem der Ansprüche 1 bis 7, **dadurch gekennzeichnet, dass** der Strömungsquerschnitt (28) der Strömungsöffnung (26) der letzten, an der Auslassöffnung (10) gelegenen Schottwand (22) kleiner ist als der Strömungsquerschnitt (28) der in Richtung der Einlassöffnung (10) davor liegenden Schottwand (22).

9. Trocknertrommel (1) nach einem der Ansprüche 1 bis 8, **dadurch gekennzeichnet, dass** sich der Schwerstofftransportkanal (32) durchgängig bis zur Auslassöffnung (10) erstreckt.

10. Trocknertrommel (1) nach einem der Ansprüche 1 bis 9, **dadurch gekennzeichnet, dass** sich der Schwerstofftransportkanal (32) von der Einlassöffnung (8) zur Auslassöffnung (10) erstreckt

11. Trommeltrockner (48) für eine zur Erzeugung von Ersatzbrennstoff aus Hausmüll (14), **gekennzeichnet durch** eine Trocknertrommel (1) nach einem der Ansprüche 1 bis 10.

12. Verfahren zum Trocknen von Hausmüll (14), der eine Leichtstofffraktion (16) und eine Schwerstofffraktion (18) umfasst, mittels einer rotierenden Trocknertrommel (1) gemäß einem der Ansprüche 1 bis 11, wobei der zu trocknende Hausmüll in die Trocknertrommel eingebracht und ein entlang der Trocknertrommel gerichteter Heißluftstrom (4) die Leichtstofffraktion durch die Trocknertrommel transportiert und wobei die Schwerstofffraktion (18) über wenigstens einen Längenabschnitt der Trocknertrommel (1) zumindest zu einem Teil an den Abwurfschaufeln (42) vorbei entlang der Trommelwand (20) transportiert wird, **dadurch gekennzeichnet, dass** der Heißluftstrom (4) im stromauf gelegenen Teil der Trocknertrommel (1) verlangsamt wird, indem sich ein Strömungskanal koaxial entlang der Trocknertrommel (1) durch zentrale Strömungsöffnungen (26) der Schottwände (22) erstreckt und die Strömungsquerschnitte (28) aufeinanderfolgender Strömungsöffnungen (22) im stromauf gelegenen Teil der Trocknertrommel (1) in Richtung von der Einlassöffnung (8) zur Auslassöffnung (10) zunehmen, wobei ein stromab gelegener Teil der Trocknertrommel (1) ein Drittel oder die Hälfte der Längserstreckung (6) der Trocknertrommel (1) umfasst.

13. Verfahren nach Anspruch 12, **dadurch gekennzeichnet, dass** die Schwerstofffraktion (18) mittels der Rotationsbewegung (34) der Trocknertrommel (1) entlang der Trommelwand (20) gefördert wird.

14. Verfahren nach Anspruch 12 oder 13, **dadurch gekennzeichnet, dass** die Schwerstofffraktion (18) durch in einer Längsrichtung (6) der Trocknertrommel (1) aufeinanderfolgende Schwerstofftransportöffnungen (30) durch Schottenwände (22) der Trocknertrommel (1) transportiert wird.

15. Verfahren nach einem der Ansprüche 12 bis 14, **dadurch gekennzeichnet, dass** der Heißluftstrom (4) im stromab gelegenen Teil der Trocknertrommel (1) beschleunigt wird.

16. Verfahren nach Anspruch 14 oder 15, **dadurch gekennzeichnet, dass** die Schwerstofffraktion (18) wenigstens zum Teil mittels einer Abwurfschaufel (42) durch eine der Abwurfschaufel zugeordnete, sich stromab an die Abwurfschaufel (42 anschließende Schwerstofftransportöffnung (30) entlang der Trommelwand (24) gefördert wird.

## Claims

1. Dryer drum (1) for domestic waste (14), comprising discharge blades (42), a drum wall (20), having at least one inlet opening (8), at least one outlet opening (10), an interior space (2) subdivided by bulkheads (22), the bulkheads extending substantially transversely to the longitudinal extent (6) of the dryer drum and having a flow channel extending substantially continuously from the inlet opening to the outlet opening along a central region (24) of the dryer drum, wherein at least one substantially continuous heavy material transport channel (32) extends through at least two successive bulkheads (22) along the drum wall (20) of the dryer drum (1) in the direction of the outlet opening (10), wherein the flow channel extends coaxially along the dryer drum (1) through central flow openings (26) of the bulkheads (22),
**characterized in that**
the flow cross sections (28) of successive flow openings (26) in the upstream part of the dryer drum (1) increase in the direction from the inlet opening (8) to the outlet opening (10), a downstream part of the dryer drum (1) comprising one third or half of the longitudinal extent (6) of the dryer drum (1).

2. Dryer drum (1) according to claim 1, **characterized in that** the heavy material transport channel (32) extends through heavy material transport openings (30) of successive bulkheads (22).

3. Dryer drum (1) according to claim 2, **characterized in that** the clear width (38) of the heavy material transport openings (30) is between about 10 cm and 40 cm.

4. Dryer drum (1) according to claims 2 or 3, **characterized in that** the clear width (38) of the heavy material transport openings (30) increases towards the outlet opening (10).

5. Dryer drum (1 ) according to any one of claims 1 to 4, **characterized in that** at least one blade segment (40) is provided that is bounded by two adjacent bulkheads (22, 22a, 22b).

6. Dryer drum (1) according to any one of claims 2 to 5, **characterized in that** successive heavy material transport openings (30) in the longitudinal direction (6) of the drum dryer (1) are not aligned with one another.

7. Dryer drum (1 ) according to any one of claims 1 to 6, **characterized in that** the flow cross sections of successive flow openings (26) in the downstream part of the dryer drum (1) decrease from the inlet opening (8) to the outlet opening (10).

8. Dryer drum (1) according to any one of the claims 1 to 7, **characterized in that** the flow cross-section (28) of the flow opening (26) of the last bulkhead (22) located at the outlet opening (10) is smaller than the flow cross-section (28) of the bulkhead (22) located upstream in the direction of the inlet opening (10).

9. Dryer drum (1 ) according to any one of claims 1 to 8, **characterized in that** the heavy material transport channel (32) extends continuously to the outlet opening (10).

10. Dryer drum (1 ) according to any one of claims 1 to 9, **characterized in that** the heavy material transport channel (32) extends from the inlet opening (8) to the outlet opening (10).

11. Drum dryer (48) for producing substitute fuel from household waste (14), **characterized by** a dryer drum (1) according to any one of claims 1 to 10.

12. A method for drying household waste (14) comprising a light fraction (16) and a heavy fraction (18) by means of a rotating dryer drum (1) according to any one of claims 1 to 11,
wherein the household waste to be dried is introduced into the dryer drum and a hot air stream (4) directed along the dryer drum transports the light fraction through the dryer drum, and wherein the heavy fraction (18) is transported along the drum wall (20) over at least one longitudinal section of the dryer drum (1) at least in part past the discharge blades (42),
**characterized in that**
the hot air stream (4) is slowed down in the upstream part of the dryer drum (1) by a flow channel extending coaxially along the dryer drum (1) through central flow openings (26) of the bulkheads (22) and the flow cross sections (28) of successive flow openings (26) in the upstream part of the dryer drum (1) increase in the direction from the inlet opening (8) to the outlet opening (10), wherein a downstream part of the dryer drum (1) corresponds to a third or half of the longitudinal extent (6) of the dryer drum (1).

13. The method according to claim 12, **characterized in that** the heavy fraction (18) is conveyed along the drum wall (20) by means of the rotational movement (34) of the dryer drum (1).

14. The method according to claims 12 or 13, **characterized in that** the heavy material fraction (18) is transported through bulkheads (22) of the dryer drum (1) through successive heavy material transport openings (30) in a longitudinal direction (6) of the dryer drum (1).

15. The method according to any one of claims 12 to 14, **characterized in that** the hot air stream (4) is accelerated in the downstream part of the dryer drum (1).

16. The method according to claims 14 or 15, **characterized in that** the heavy material fraction (18) is conveyed at least in part by means of a discharge blade (42) through a heavy material transport opening (30) associated with the discharge blade and adjoining the discharge blade (42) downstream along the drum wall (24).

## Revendications

1. Tambour de séchage (1) pour ordures ménagères (14), comportant des pales d'évacuation (42), une paroi de tambour (20), au moins une ouverture d'entrée (8), au moins une ouverture de sortie (10), une chambre intérieure (2) divisée par des cloisons (22), dans lequel les cloisons s'étendent essentiellement transversalement à l'extension longitudinale (6) du tambour de séchage, et un canal d'écoulement s'étendant essentiellement de manière continue de l'ouverture d'entrée à l'ouverture de sortie le long d'une zone centrale (24) du tambour de séchage, dans lequel au moins un canal de transport de matières lourdes essentiellement continu (32) s'étend à travers au moins deux cloisons successives (22) le long de la paroi de tambour (20) du tambour de séchage (1) en direction de l'ouverture de sortie (10), dans lequel le canal d'écoulement s'étend coaxialement au tambour de séchage (1) à travers des ouvertures d'écoulement centrales (26) des cloisons (22), **caractérisé en ce que** les sections transversales d'écoulement (28) des ouvertures d'écoulement successives (22) augmentent dans la partie amont du tambour de séchage (1) dans la direction allant de l'ouverture d'entrée (8) à l'ouverture de sortie (10), dans lequel une partie aval du tambour de séchage (1) comporte le tiers ou la moitié de l'extension longitudinale (6) du tambour de séchage (1).

2. Tambour de séchage (1) selon la revendication 1, **caractérisé en ce que** le canal de transport de matières lourdes (32) traverse des ouvertures de transport de matières lourdes (30) de cloisons successives (22).

3. Tambour de séchage (1) selon la revendication 2, **caractérisé en ce que** la largeur libre (38) des ouvertures de transport de matières lourdes (30) est comprise environ entre 10 cm et 40 cm.

4. Tambour de séchage (1) selon la revendication 2 ou 3, **caractérisé en ce que** la largeur libre (38) des ouvertures de transport de matières lourdes (30) augmente vers l'ouverture de sortie (10).

5. Tambour de séchage (1) selon l'une des revendications 1 à 4, **caractérisé en ce qu'**au moins un segment de pale (40) délimité par deux parois de cloison adjacentes (22, 22a, 22b) est présent.

6. Tambour de séchage (1) selon l'une des revendications 2 à 5, **caractérisé en ce que** les ouvertures de transport de matières lourdes successives (30) ne sont pas alignées les unes avec les autres dans la direction longitudinale (6) du tambour de séchage (1).

7. Tambour de séchage (1) selon l'une des revendications 1 à 6, **caractérisé en ce que** les sections transversales d'écoulement des ouvertures d'écoulement successives (26) dans la partie aval du tambour de séchage (1) décroissent de l'ouverture d'entrée (8) vers l'ouverture de sortie (10).

8. Tambour de séchage (1) selon l'une des revendications 1 à 7, **caractérisé en ce que** la section transversale d'écoulement (28) de l'ouverture d'écoulement (26) de la dernière cloison (22) située à l'ouverture de sortie (10) est inférieure à la section transversale d'écoulement (28) de la cloison (22) précédente en direction de l'ouverture d'entrée (10).

9. Tambour de séchage (1) selon l'une des revendications 1 à 8, **caractérisé en ce que** le canal de transport de matières lourdes (32) s'étend en continu jusqu'à l'ouverture de sortie (10) .

10. Tambour de séchage (1) selon l'une des revendications 1 à 9, **caractérisé en ce que** le canal de transport des matières lourdes (32) s'étend de l'ouverture d'entrée (8) à l'ouverture de sortie (10).

11. Tambour de séchage (48) pour produire un combustible de substitution à partir d'ordures ménagères (14), **caractérisé par** un tambour de séchage (1) selon l'une des revendications 1 à 10.

12. Procédé de séchage d'ordures ménagères (14) comprenant une fraction de matières légères (16) et une fraction de matières lourdes (18), mis en œuvre au moyen d'un tambour de séchage rotatif (1) selon l'une des revendications 1 à 11, dans lequel les ordures ménagères à sécher sont introduites dans le tambour de séchage et un flux d'air chaud (4) parcourant le tambour de séchage transporte la fraction de matières légères à travers le tambour de séchage, et dans lequel la fraction de matières lourdes (18) est transportée sur au moins une section longitudinale du tambour de séchage (1) en passant par au moins une partie des pales d'évacuation (42) le long de la paroi du tambour (20), **caractérisé en ce que** le flux d'air chaud (4) est ralenti dans la partie amont du tambour de séchage (1) dans laquelle un canal d'écoulement s'étend coaxialement au tambour de séchage (1) à travers des ouvertures d'écoulement centrales (26) des cloisons (22), et les sections transversales d'écoulement (28) d'ouvertures d'écoulement successives (22) augmentent dans la partie amont du tambour de séchage (1) dans la direction allant de l'ouverture d'entrée (8) vers l'ouverture de sortie (10), dans lequel une partie aval du tambour de séchage (1) comporte le tiers ou la moitié de l'extension longitudinale (6) du tambour de séchage (1).

13. Procédé selon la revendication 12, **caractérisé en ce que** la fraction de matières lourdes (18) est transportée le long de la paroi du tambour (20) du fait du mouvement de rotation (34) du tambour de séchage (1).

14. Procédé selon la revendication 12 ou 13, **caractérisé en ce que** la fraction de matières lourdes (18) est transportée en traversant des parois de cloison (22) du tambour de séchage (1) via des ouvertures de transport de matières lourde (30) successives en direction longitudinale (6) du tambour de séchage (1).

15. Procédé selon l'une des revendications 12 à 14, **caractérisé en ce que** le flux d'air chaud (4) est accéléré dans la partie aval du tambour de séchage (1).

16. Procédé selon la revendication 14 ou 15, **caractérisé en ce que** la fraction de matières lourdes (18) est transférée au moins en partie le long de la paroi du tambour (24) au moyen d'une pale d'évacuation (42) à travers une ouverture de transport de matières lourdes adjacente (30) associée à la pale d'évacuation (42) et en aval de celle-ci.
